Europäisches Patentamt

European Patent Office

Office européen des brevets

(11) Numéro de publication: **0 384 815 A1**

## DEMANDE DE BREVET EUROPEEN

(21) Numéro de dépôt: 90400433.0

(51) Int. Cl.5 **C04B 18/28**

(22) Date de dépôt: 16.02.90

Le titre de l'invention a été modifié (Directives relatives à l'examen pratiqué à l'OEB, A-III, 7.3)

(30) Priorité: **22.02.89 FR 8902302**

(43) Date de publication de la demande:
**29.08.90 Bulletin 90/35**

(84) Etats contractants désignés:
**BE DE**

(71) Demandeur: **GROUPEMENT D'INTERET ECONOMIQUE TECHNIQUE, "MON LOGIS"**
**Giet - Mon Logis, 4 Rue Jeanne d'Arc**
**F-10041 Troyes Cédex(FR)**

(72) Inventeur: **Rasetti, Charles**
**10 Rue Hélène Rasetti**
**F-10120 Saint André Les Vergers(FR)**

(74) Mandataire: **Bruder, Michel et al**
**Cabinet Michel Bruder Conseil en Brevets**
**10, rue de la Pépinière**
**F-75008 Paris(FR)**

(54) **Procédé de traitement de la chènevotte, agrégats ainsi obtenus et béton incorporant ces agrégats.**

(57) Après calibrage de la chènevotte obtenue par défibrage mécanique du chanvre, on procède à son imprégnation par un sel de calcium ou de baryum en solution, de préférence du chlorure de calcium, on procède ensuite à un premier ressuage de la chènevotte imprégnée en incorporant à la solution précédente des corps durs pulvérisés, tel que par exemple de la silice, de la chaux ou du ciment, à l'exclusion des ciments laitiers ou alumineux, on pulvérise alors sur le mélange obtenu une solution de silicate de sodium, ce qui procure une pétrification du coeur de la chènevotte ainsi qu'une silicatisation de son enveloppe et des corps durs en poudre, on incorpore enfin au mélange contenant la chènevotte pétrifiée une seconde quantité de corps durs pulvérisés, tel que par exemple de la silice, de la chaux ou du ciment, à l'exclusion des ciments laitiers ou alumineux, ce qui procure un enrobage silicaté de la chènevotte, tout en provoquant le ressuage immédiat dudit mélange, les éléments utilisés par ledit procédé ayant, les uns par rapport aux autres, des proportions adéquates.

L'invention concerne également le béton réalisé à partir d'une charge incorporant en partie au moins le produit obtenu par application du procédé selon l'invention.

L'invention concerne un procédé de traitement de la chènevotte tirée d'un chanvre monoïque en vue de l'obtention d'agrégats durcis utilisables comme isolant ou comme charge dans la confection d'un béton, et béton obtenu par ce procédé.

On connaît des procédés se rapportant notamment à l'utilisation de déchets de bois ou de matières lignocellulosiques. En particulier, le brevet français FR-2 567 119 se rapporte à un procédé de fabrication d'agrégats stabilisés faiblement absorbants, à partir de fibres ligno-cellulosiques : le traitement de ces fibres comprend essentiellement une pyrolyse à haute température, un concassage pour préparer les fibres, un traitement chimique à base d'un silicate et d'un sel de calcium, un lavage et un séchage. D'autre part, un agent de durcissement est additionné au traitement chimique de base et, par un traitement ultérieur d'imprégnation d'un composé hydrofuge, on limite la capacité d'absorption hygrométrique des agrégats.

Un autre brevet français FR-2 543 537 se rapporte à un procédé de fabrication d'un matériel à base de ciment contenant des sciures de bois traitées et enrobées avec des esters de l'acide silicique.

Ces procédés présentent de graves inconvénients. En effet, les déchets de bois ou les matières ligno-cellulosiques utilisés, s'ils ne subissent pas de traitement thermique à haute température, demeurent sensibles aux moisissures, aux insectes et contiennent encore des impuretés nuisibles à la stabilité des agrégats. En outre, ces agrégats demeurent absorbants, ce qui, lors de leur utilisation comme charge dans un béton réalisé à partir de liants hydrauliques, a le grave inconvénient de prolonger la durée de séchage du béton, et de modifier les proportions habituelles en eau de gachage nécessaire à la réalisation de ce béton.

L'invention remédie à tous ces inconvénients, en procurant des agrégats durcis, réalisés à partir de chènevotte tirée d'un chanvre monoïque, dont les qualités de structure ne nécessitent ni traitement thermique, ni addition importante d'agents imperméabilisants.

L'invention concerne ainsi un procédé de traitement de la chènevotte tirée d'un chanvre monoïque caractérisé en ce que, après calibrage de la chènevotte obtenue par défibrage mécanique du chanvre, on procède à son imprégnation par un sel de calcium ou de baryum en solution, de préférence du chlorure de calcium, en ce qu'on procède ensuite à un premier ressuage de la chènevotte imprégnée en incorporant dans la solution précédente des corps durs pulvérisés, tels que par exemple de la silice, de la chaux ou du ciment, à l'exclusion des ciments laitiers ou alumineux, en ce qu'on pulvérise alors, sur le mélange obtenu, une solution de silicate de sodium, ce qui procure une pétrification du coeur de la chènevotte ainsi qu'une silicatisation de son enveloppe et des corps durs en poudre, en ce qu'on incorpore enfin, au mélange contenant la chènevotte pétrifiée, une seconde quantité de corps durs pulvérisés, tels que par exemple de la silice, de la chaux ou du ciment, à l'exclusion des ciments laitiers ou alumineux, ce qui procure un enrobage silicaté de la chènevotte, tout en provoquant le ressuage immédiat dudit mélange, les éléments utilisés par ledit procédé ayant, les uns par rapport aux autres, des proportions adéquates.

Dans le procédé selon l'invention, 1 utilisation de chènevotte tirée d'un chanvre monoïque constitue le premier apport de l'invention. En effet, on connaît le chanvre monoïque pour ses qualités d'homogénéité, de durabilité et pour la possibilité d'en planifier les récoltes. La structure de la chènevotte tirée de ce chanvre est totalement différente de celle d'autres déchets ligno-cellulosiques : la fibre de chènevotte est une fibre longue, mince, dont l'extérieur est semblable à l'extérieur de la paille, mais dont le coeur a une densité relativement faible. La pétrification a pour but de stabiliser le coeur putrescible de la chènevotte par formation d'un silicate de calcium à l'intérieur de la fibre : on utilise pour ce faire un procédé chimique connu, action d'un sel de calcium dissout, du type du chlorure de calcium, sur un silicate de sodium.

Ce traitement de minéralisation de la chènevotte est cependant insuffisant pour lui donner des qualités suffisantes d'imperméabilité : il convient donc de procéder à l'enrobage des agrégats obtenus, et cet enrobage constitue le deuxième apport du procédé selon l'invention. On effectue une pulvérisation de corps durs pulvérisés sur le mélange contenant la chènevotte pétrifiée : ces corps durs pulvérisés, du type de la silice, de la chaux ou du ciment, possédent principalement une partie pulvérulente qui vient adhérer aux agrégats, le silicate de sodium provoquant alors la silicatisation de ceuxci, afin de former une couche dure autour des agrégats.

D'une manière inattendue, la pulvérisation des corps durs pulvérisés a pour effet de ressuer le mélange contenant la chènevotte pétrifiée : l'absorption de l'eau de dissolution est immédiate, les corps durs pulvérisés absorbant l'eau de gachage, tout en adhérant à la surface de la chènevotte.

On évite ainsi le chauffage ou le séchage artificiel des agrégats, ce qui, économiquement, est un avantage considérable.

L'enrobage silicaté des agrégats de chènevotte durcis permet de faire adhérer ces agrégats aux liants hydrauliques utilisés lors de la confection d'un béton incorporant ces agrégats comme charge.

En outre, il est important de noter que ces corps durs pulvérisés ne peuvent en aucun cas être composés de ciments laitiers ou alumineux, qui diminuent l'adhérence aux liants hydrauliques. Un enrobage à base de silicones est à bannir pour les mêmes raisons.

D'autres caractéristiques et avantages du procédé selon l'invention ressortiront mieux encore de la description qui va suivre d'un mode de mise en oeuvre non limitatif dudit procédé.

Pour traiter ainsi une quantité de 200 litres de chènevotte calibrée, chaque fibre faisant environ dix millimètres de long sur deux millimètres de large et un millimètre d'épaisseur, on utilise dix litres d'une solution de silicate de sodium, de densité égale à 1,37 environ, 30 litres de chlorure de calcium obtenus par dissolution de 10 à 20 % de craie et 10 à 20 kilogrammes de corps durs pulvérisés, tels que par exemple de la silice, de la chaux ou du ciment, à l'exclusion des ciments laitiers ou alumineux. Selon l'enrobage réalisé, on obtient une chènevotte traitée dont la densité varie entre 100 et 300 kilogrammes par mètre cube.

Il est à noter que l'enrobage peut être réalisé en plusieurs opérations successives selon la densité que l'on désire obtenir : il peut être alors nécessaire d'utiliser des corps durs pulvérisés qui durcissent d'eux-mêmes, comme les ciments. Le pouvoir d'isolation thermique et acoustique des agrégats obtenus est important : utilisés tels quels, en vrac, ils conviennent remarquablement à l'isolation des planchers ou des combles.

En outre, afin d'utiliser ces agrégats comme charge dans un béton, il est nécessaire d'ajouter, lors du traitement de la chènevotte, un composé imperméabilisant aux corps durs pulvérisés : en effet, les agrégats, obtenus sans ce composé hydrofuge, demeurent relativement poreux. On ajoute alors un composé imperméabilisant en poudre, de préférence du type connu sous la marque commerciale SIKALITE, aux corps durs pulvérisés, cet apport étant effectué préférentiellement à sec, avant l'incorporation des composés en poudre dans la dissolution d'imprégnation de la chènevotte, ou leur pulvérisation dans la dissolution de silicatisation de la chènevotte, lorsqu'ils procurent un ressuage de ladite solution. L'utilisation d'un composé imperméabilisant en poudre est bien entendu lié à ce phénomène de ressuage : l'utilisation d'un imperméabilisant liquide ne posséderait aucunement les mêmes avantages.

Il reste alors à procéder au séchage naturel de la chènevotte traitée : on stocke celle-ci durant environ trois semaines avant son utilisation. Les agrégats obtenus sont conditionnés dans des sacs et leur mise en oeuvre sur le chantier, en vue de leur utilisation comme charge dans l'obtention d'un béton, est immédiate. On mélange alors à sec environ 70 % de chènevotte pétrifiée, à 20 % de chènevotte fibreuse non traitée et 10 % de silice granuleuse ou de sable silicieux fin. Puis, on procède classiquement en y mélangeant, toujours à sec, les liants hydrauliques, de préférence du ciment ; un mouillage progressif procure alors, après un malaxage régulier, une pâte homogène. Pour une mise en oeuvre à la pompe de ce béton, il est connu d'ajouter par exemple de la silice pulvérulente, qui a pour effet d'augmenter la plasticité de la pate.

On notera que l'application du procédé, selon l'invention, de traitement de la chènevotte tirée d'un chanvre monoïque au traitement de la partie ligneuse du lin, a été testée : les agrégats obtenus, tout en ne possédant pas, de part leur forme et leur qualités intrinsèques, les avantages de la chènevotte, demeurent satisfaisants.

Il est bien entendu qu'au-delà des caractéristiques décrites, l'invention s'étend également à diverses modifications simples, substitution par des équivalents et autres variantes directes.

Le produit obtenu par application du procédé selon l'invention constitue une véritable matière première au même titre que le sable, le gravier et autre composants, des bétons, mortiers et enduits ; il constitue également une matière première utilisable directement, ou entrant dans la composition d'isolants thermiques et acoustiques.

## Revendications

1 - Procédé de traitement de la chènevotte tirée d'un chanvre monoïque caractérisé en ce que, après calibrage de la chènevotte obtenue par défibrage mécanique du chanvre, on procède à son imprégnation par un sel de calcium ou de baryum en solution, de préférence du chlorure de calcium, en ce qu'on procède ensuite à un premier ressuage de la chènevotte imprégnée en incorporant à la solution précédente des corps durs pulvérisés, tel que par exemple de la silice, de la chaux ou du ciment, à l'exclusion des ciments laitiers ou alumineux, en ce qu'on pulvérise alors sur le mélange obtenu une solution de silicate de sodium, ce qui procure une pétrification du coeur de la chènevotte ainsi qu'une silicatisation de son enveloppe et des corps durs en poudre, en ce qu'on incorpore enfin au mélange contenant la chènevotte pétrifiée une seconde quantité de corps durs pulvérisés, tel que par exemple de la silice, de la chaux ou du ciment, à l'exclusion des ciments laitiers ou alumineux, ce qui procure un enrobage silicaté de la chènevotte, tout en provoquant le ressuage immédiat dudit mélange, les éléments utilisés par ledit procédé ayant, les uns par rapport aux autres, des proportions adéquates.

2 - Procédé selon la revendication 1, caractérisé en ce que, pour traiter une quantité de 200 litres de chènevotte calibrée, on utilise 10 litres de silicate de sodium de densité égale à 1,37 environ, 30 litres de chlorure de calcium obtenu par dissolution de 10 à 20 % de craie, et 10 à 20 kilogrammes de corps durs pulvérisés, tel que par exemple de la silice, de la chaux ou du ciment, à l'exclusion des ciments laitiers ou alumineux.

3 - Procédé de traitement de la chènevotte tirée d'un chanvre monoïque selon l'une quelconque des revendications précédentes, caractérisé en ce qu on ajoute un composé imperméabilisant en poudre, de préférence du type connu sous la marque commerciale SIKLALITE, aux corps durs pulvérisés, cet apport étant effectué préférentiellement à sec, avant l'incorporation des composés en poudre dans la dissolution d'imprégnation et de silicatisation de la chènevotte.

4 - Procédé de traitement de la chènevotte tirée d'un chanvre monoïque selon l'une quelconque des revendications précédentes, caractérisé en ce qu'on procède au séchage naturel de la chènevotte traitée pendant une durée d'au moins trois semaines.

5 - Produits obtenus par application du procédé selon l'une quelconque des revendications précédentes.

6 - Béton utilisable dans la confection de produits manufacturés destinés à l'industrie du bâtiment, comprenant un liant hydraulique et une charge, caractérisé en ce que la charge est constituée au moins en partie des produits obtenus par le procédé mis en oeuvre selon l'une quelconque des revendications 1 à 4.

7 - Béton selon la revendication 6, caractérisé en ce que les proportions adéquates de la charge pour l'obtention de ce béton sont avantageusement égales, en volume, à 70 % de chènevotte pétrifiée, à 20 % de chènevotte fibrée et à 10 % de silice granuleuse ou de sable siliceux fin.

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| D,A | FR-A-2 567 119 (C. GUIDAT) <br> * Revendications 1,2 * <br> --- | 1,5,6 | C 04 B  18/28 |
| A | FR-A-1 529 863 (K. METJE) <br> * Page 1, colonne de gauche, lignes 23-30; résumé point 16 * <br> --- | 1,5 | |
| A | FR-A-1 475 960 (Ch. THEVENOT et al.) <br> * Résumé points 1,3-4 * <br> --- | 1,5,6 | |
| A | WO-A-8 202 710 (SOC. FR. D'AGREGATS STABILISES) <br> * Revedications 1,2 * <br> --- | | |
| A | GB-A-2 073 167 (H. KUBER) <br> * Résumé * <br> ----- | | |

**DOMAINES TECHNIQUES RECHERCHES (Int. Cl.5)**

C 04 B   18

Le présent rapport a été établi pour toutes les revendications

| Lieu de la recherche | Date d'achèvement de la recherche | Examinateur |
|---|---|---|
| LA HAYE | 09-05-1990 | DAELEMAN P.C.A. |